# DEMANDE DE BREVET EUROPEEN

(11) **EP 1 004 763 A1**
(43) Date de publication de la demande: **31.05.2000**
(21) Numéro de dépôt: 99402944.5
(22) Date de dépôt: 26.11.1999
(51) Int. Cl.: F02D 41/30, B60T 13/72, B60T 17/02, F02D 33/02

(54) **Procédé et dispositif de commande d'un moteur à combustion interne**

(30) Priorité: 27.11.1998 FR 9814954
(71) Demandeur: RENAULT, 92109 Boulogne-Billancourt (FR)
(72) Inventeur: Leroux, Jean-Francois, 92500 Rueil Malmaison (FR)

(57) **Abrégé**

Procédé de commande de la dépression régnant dans le collecteur d'admission d'un moteur à combustion interne (1) propulsant un véhicule automobile équipé d'un dispositif de freinage assisté par ladite dépression et commandé par une pédale (15), le moteur (1) pouvant fonctionner soit en mélange air/carburant pauvre soit en mélange stoechiométrique homogène, caractérisé en ce que, lors d'un fonctionnement en mélange pauvre, on détecte un niveau de dépression dans l'assistance de freinage et dès que ce niveau devient inférieur à une première valeur prédéterminée (S1), on commande un passage du fonctionnement du moteur en mélange stoechiométrique homogène en conservant le couple du moteur, pour renforcer ladite dépression.

## Description

La présente invention concerne un procédé de commande d'un moteur à combustion interne destiné notamment à équiper un véhicule automobile ou routier, ce moteur pouvant fonctionner soit, en mélange air/carburant pauvre soit, en mélange stoechiométrique homogène.

La présente invention concerne plus particulièrement un procédé de commande par lequel la dépression régnant dans le collecteur d'admission d'un moteur est ajustée en fonction des besoins d'un dispositif de freinage assisté par ladite dépression.

La présente concerne également un dispositif de commande adapté pour la mise en oeuvre du procédé objet de l'invention.

On a conçu et réalisé des moteurs à combustion interne, en particulier les moteurs à injection directe de carburant et allumage commandé, pouvant fonctionner avec un mélange air/carburant pauvre, c'est-à-dire présentant une richesse R en carburant inférieure à celle correspondant à la stoechiométrie, pour laquelle R = 1, dans les buts de réduire leurs consommations en carburant et leurs émissions de substances polluantes.

Un tel mode de fonctionnement en mélange air/carburant pauvre convient plus particulièrement quand le couple demandé par le conducteur du véhicule est relativement faible, en particulier lorsque la vitesse du véhicule est basse. Lorsque le couple demandé est plus élevé, à plus grande vitesse du véhicule par exemple, la richesse du mélange peut être accrue, par exemple jusqu'à R = 1, pour permettre la fourniture du couple demandé.

Dans le cas d'un moteur fonctionnant en mélange pauvre, on sait que la pression qui s'établit alors dans le collecteur d'admission est peu différente de la pression atmosphérique et que, par conséquent, l'assistance fournie par l'amplificateur pneumatique 16 est faible, ce qui est dommageable du double point de vue de la sécurité du véhicule et du confort de conduite.

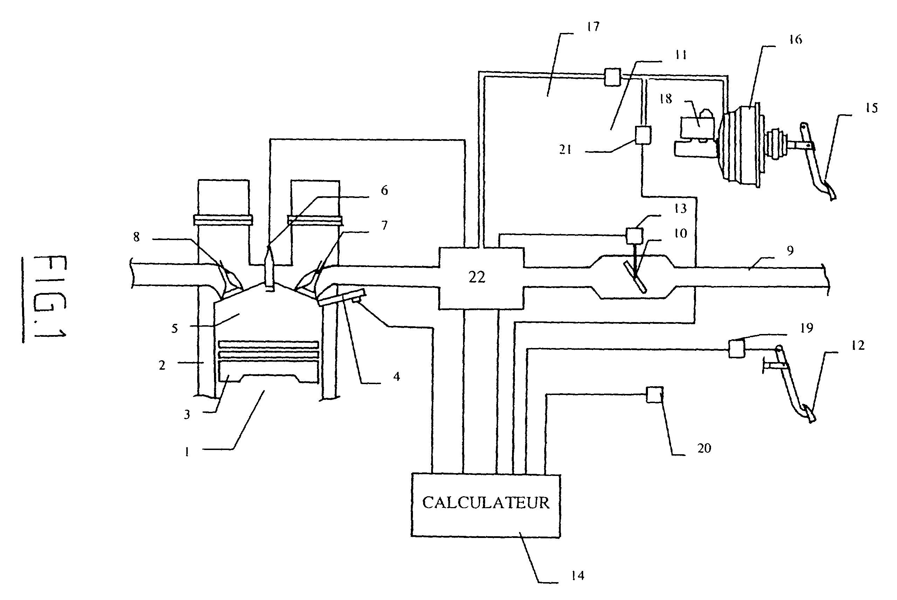

On a représenté schématiquement à la figure 1 du dessin annexé un moteur à combustion interne 1 de ce type et des moyens de commande qui lui sont associés lorsqu'il sert à propulser un véhicule automobile. Le moteur 1 est représenté schématiquement par l'un de ses cylindres référencé 2 muni d'un piston 3, d'un injecteur de carburant 4 débouchant directement dans une chambre de combustion 5, d'une bougie 6, d'une soupape d'admission 7 et d'une soupape d'échappement 8.

L'air aspiré par un conduit 9 dans lequel est interposé un papillon des gaz 10. Celui-ci peut-être directement commandé par une pédale d'accélérateur 12 ou, comme représenté, par l'intermédiaire d'un moteur électrique 13, lui-même commandé par un calculateur électronique numérique 14.

Classiquement encore, le véhicule est équipé d'un dispositif de freinage commandé par une pédale de frein 15 et assisté par un amplificateur pneumatique 16 d'un type bien connu, raccordé au collecteur d'admission du moteur 1, en aval du papillon 10, par un conduit 17, à travers un clapet anti-retour 11 empêchant un reflux d'air dans l'amplificateur 16. La dépression régnant dans le collecteur d'admission du moteur permet d'amplifier l'effort de freinage exercé sur la pédale 15 par le conducteur, effort qui accroît la pression d'un liquide de freinage contenu dans un circuit hydraulique (non représenté) raccordé à un maître-cylindre 18 adjacent à l'amplificateur 16.

Le calculateur 14 est dûment programmé pour gérer le fonctionnement du moteur de manière que celui-ci délivre le couple demandé par le conducteur, connu du calculateur par une mesure de l'enfoncement α de la pédale d'accélérateur 15, délivré par un capteur potentiométrique 19, dans le respect de relations qui lient l'angle d'avance de l'allumage du mélange air/carburant et le temps d'ouverture de l'injecteur 4 à divers paramètres tels que la pression ou le débit d'air dans le collecteur d'admission du moteur, le régime du moteur, la température de l'air ambiant, celle du liquide de refroidissement du moteur, etc., comme cela est bien connu de l'homme du métier.

Dans le cas d'un moteur fonctionnant en mélange pauvre, on sait que la pression qui s'établit alors dans le collecteur d'admission est peu différente de la pression atmosphérique et que, par conséquent, l'assistance fournie par l'amplificateur pneumatique 16 est faible, ce qui est dommageable du double point de vue de la sécurité du véhicule et du confort de conduite.

Pour pallier cet inconvénient, on propose dans la demande de brevet japonais JP 08164840 de mesurer la pression d'assistance communiquée à l'amplificateur pneumatique 16 et de commander une fermeture du papillon des gaz 10 si la pression mesurée est supérieure à une valeur de seuil prédéterminée. La fermeture du papillon a pour effet d'accroître la dépression dans le collecteur d'admission et donc de rendre l'assistance au freinage développée par l'amplificateur pneumatique 16 plus efficace. La richesse du mélange air/carburant admis dans le moteur est alors réglée en conséquence du débit d'air admis dans le moteur.

Cette solution présente un inconvénient : elle peut conduire à des richesses du mélange air/carburant supérieures à 1, ce qui est défavorable du double point de vue de la consommation du moteur et de la pollution de l'environnement.

La présente invention a précisément pour but de fournir un procédé et un dispositif de commande du moteur et donc de commande de la dépression régnant dans le collecteur d'admission d'un moteur à combustion interne du type décrit ci-dessus, qui ne présentent pas l'inconvénient précité.

On atteint ce but de l'invention, ainsi que d'autres qui apparaîtront à la lecture de la description qui va suivre, avec un procédé et un dispositif de commande de la dépression régnant dans le collecteur d'admission d'un moteur à combustion interne propulsant un véhicule automobile équipé d'un dispositif de freinage assisté par ladite dépression et commandé par pédale, le moteur pouvant fonctionner soit en mélange air/carburant pauvre soit en mélange stoechiométrique homogène.

Ce procédé et ce dispositif objets de l'invention sont remarquables en ce que, lors d'un fonctionnement en mélange pauvre, on détecte un niveau de dépression dans l'assistance de freinage et dès que ce niveau devient inférieur à une valeur prédéterminée, on commande un passage du fonctionnement du moteur en mélange stoechiométrique homogène en conservant le couple du moteur, ce qui a pour effet de renforcer ladite dépression dans l'assistance de freinage. On revient ensuite en fonctionnement en mélange pauvre en conservant le couple du moteur, dès lors que le niveau de dépression devient supérieur à une seconde valeur prédéterminée.

Grâce à la présente invention, comme on le verra plus loin en détail, on assure ainsi une assistance suffisante au freinage sans que la richesse du mélange ne passe au-dessus de celle correspondant à la stoechiométrie.

On comprendra mieux les buts, aspects et avantages de la présente invention, d'après la description donnée ci-après d'un mode de réalisation de l'invention, donné à titre d'exemple non limitatif, en se référant aux dessins annexés, dans lesquels :
- la figure 1 est une représentation schématique d'un moteur à combustion interne, ce moteur étant destiné à entraîner un véhicule automobile équipé d'un dispositif de freinage assisté selon le procédé objet de la présente invention,
- la figure 2 est un organigramme d'un programme permettant de mettre en oeuvre le procédé suivant la présente invention.

On revient brièvement sur le schéma de la figure 1 pour signaler la présence de deux capteurs délivrant des signaux supplémentaires au calculateurs 14, le procédé suivant l'invention faisant usage de ces deux signaux.

Il s'agit d'une part d'un capteur 20 permettant de mesurer la pression atmosphérique : Patmo et d'autre part, d'un capteur 21 permettant de mesurer la pression régnant dans l'amplificateur pneumatique 16 : Passis. L'ensemble des moyens schématisés sur la figure 1 constitue un dispositif permettant la mise en oeuvre du procédé suivant l'invention.

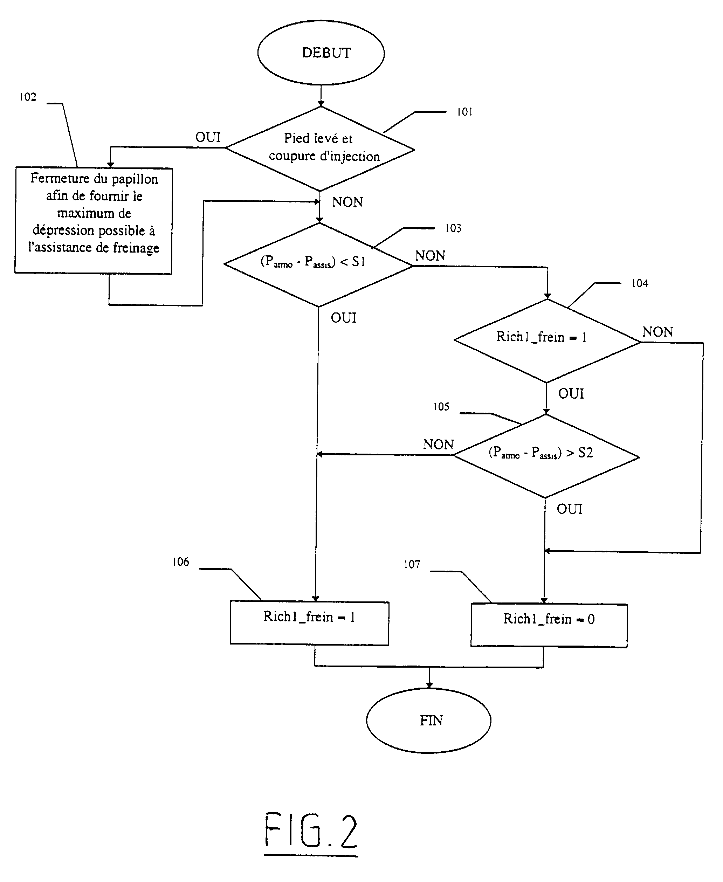

On se réfère maintenant à l'organigramme de la figure 2 pour décrire la stratégie suivant l'invention en plus de détails. Cet organigramme est celui d'une tâche, ou "routine", exécutée périodiquement par le calculateur 14, par exemple toutes les 10 millisecondes

A l'étape 101, on examine le niveau du signal de sortie du capteur 19 sensible à la position de la pédale d'accélérateur 12. Si ce niveau est représentatif d'une position "pied levé" de cette pédale, et que le calculateur 14 a coupé l'alimentation de l'injecteur 4, comme c'est le cas notamment quand le conducteur débraye l'embrayage du moteur du véhicule pour commander un changement de rapport dans une boîte de vitesses associée au moteur, on commande (étape 102) le moteur électrique 13 pour qu'il ferme le papillon 10 de manière à établir une dépression maximale dans le collecteur d'admission du moteur, en vue d'un éventuel freinage assisté par cette dépression.

A l'étape 103, on examine si la dépression régnant dans l'amplificateur pneumatique 16, dépression définie par Patmo - Passis, est inférieure à une valeur de seuil prédéterminée S1 (par exemple 400 mbar), ce seuil représentant la valeur minimale de dépression permettant d'assurer la prestation d'assistance au freinage souhaitée.

Si donc Patmo - Passis est supérieur à S1, la prestation d'assistance au freinage est considéré comme satisfaisante et il n'y a donc pas lieu de modifier le fonctionnement du moteur.

Si par contre, Patmo - Passis est inférieur à S1, la prestation d'assistance au freinage n'est plus assurée et il y a donc lieu de modifier le fonctionnement du moteur pour générer de la dépression dans le collecteur d'admission.

On passe alors à l'étape 106 où le calculateur fixe la richesse de consigne à R = 1 (mélange stoechiométrique homogène) en conservant le couple du moteur (Rich1_frein = 1). Cette action permet de forcer la réduction du débit d'air par fermeture du papillon et par la même occasion d'augmenter la dépression dans le collecteur d'admission ainsi que la dépression dans l'assistance de freinage. Le fonctionnement en mélange stoechiométrique homogène permet ainsi de revenir à des niveaux de dépression dans l'assistance de freinage satisfaisants pour assurer la fonction.

Si la valeur prédéterminée S1 est atteinte, l'étape 104 teste si le calculateur a déjà fixé la richesse de consigne à R =1 dans une exécution précédente de la routine. Si c'est le cas, on passe à l'étape 105 pour examiner si la dépression dans l'assistance est devenue supérieure à une valeur prédéterminée S2 (450 mbar par exemple). Si la réponse est négative, c'est que l'on estime que la dépression dans l'assistance n'est pas encore suffisante et le calculateur continu à fixer la richesse de consigne à R = 1 (étape 106).

Ce second seuil S2 est défini de façon à éviter que cette routine ne fasse osciller le mode de fonctionnement du moteur autour du seuil S1 de dépression, entre un fonctionnement mélange pauvre et un fonctionnement mélange stoechiométrique homogène. La différence entre les seuils S2 et S1 représente un hystérésis.

Si par contre la dépression dans l'assistance est supérieure au seuil S2, on estime qu'elle est suffisante pour assurer le confort et la sécurité du freinage suivant et on passe à l'étape 107 où le calculateur cesse de fixer la richesse de consigne à R = 1 pour autoriser à nouveau le fonctionnement du moteur en mélange air/carburant pauvre en conservant le couple du moteur.

Si la réponse à l'étape 104 est négative, c'est à dire que le moteur fonctionne en mélange air/carburant pauvre et que la dépression dans l'assistance est supérieure au seuil S1, on sort de la routine par l'étape 107 sans modifier le fonctionnement du moteur en considérant que la dépression dans l'assistance est suffisante pour assurer le confort et la sécurité du freinage suivant.

Il apparaît maintenant clairement que la stratégie de commande de la dépression dans le collecteur d'admission du moteur conforme à la présente invention se distingue nettement de celle décrite dans la demande de brevet japonais JP 08164840 précitée en ce qu'elle permet d'éviter de conduire à des richesses du mélange air/carburant supérieures à 1.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

## Revendications

1. Procédé de commande de la dépression régnant dans le collecteur d'admission d'un moteur à combustion interne (1) propulsant un véhicule automobile équipé d'un dispositif de freinage assisté par ladite dépression et commandé par une pédale (15), le moteur (1) pouvant fonctionner soit en mélange air/carburant pauvre soit en mélange stoechiométrique homogène, caractérisé en ce que, lors d'un fonctionnement en mélange pauvre, on détecte un niveau de dépression dans l'assistance de freinage et dès que ce niveau devient inférieur à une première valeur prédéterminée (S1), on commande un passage du fonctionnement du moteur en mélange stoechiométrique homogène en conservant le couple du moteur, pour renforcer ladite dépression.

2. Procédé selon la revendication 1, caractérisé en ce qu'on revient au fonctionnement en mélange air/carburant pauvre en conservant le couple du moteur, dès lors que ledit niveau de dépression devient supérieur à une seconde valeur prédéterminée (S2).

3. Procédé selon l'une quelconque des revendications 1 à 2, caractérisé en ce que, si on détecte un passage en position « pied levé » d'une pédale d'accélérateur (12) de commande du moteur (1) et une coupure d'injection de carburant dans ledit moteur, on commande la fermeture d'un papillon des gaz (10) disposé en amont du collecteur d'admission du moteur (1) .

4. Dispositif pour la mise en oeuvre du procédé selon à l'une quelconque des revendications 1 à 3, caractérisé en ce qu'il comprend un capteur (21) pour mesurer la pression dans l'assistance de freinage, un capteur (20) pour mesurer la pression atmosphérique, un moyen de calcul pour calculer la différence entre la valeur donnée par le second capteur et la valeur donnée par le premier capteur et des moyens de commande (14) adaptés pour, lors d'un fonctionnement dudit moteur (1) en mélange pauvre et quand ladite différence devient inférieure à une première valeur prédéterminée (S1), commander un passage du fonctionnement en mélange stoechiométrique homogène en conservant le couple du moteur.

5. Dispositif selon la revendication 4, caractérisé en ce que lesdits moyens de commande (14) étant adaptés pour, lors d'un fonctionnement dudit moteur (1) en mélange stoechiométrique pour renforcer la dépression et quand ladite différence devient supérieure à une seconde valeur prédéterminée (S2), commander un passage du fonctionnement en mélange pauvre en conservant le couple du moteur.

6. Dispositif selon l'une quelconque des revendications 4 à 5, caractérisé en ce qu'il comprend des moyens (19) pour détecter l'arrivée en position « pied levé » d'une pédale d'accélérateur (12) de commande du moteur (1), des moyens de détection d'une coupure d'injection de carburant dans le moteur, lesdits moyens de commande (14) étant sensibles à la détection de cette position et de cette coupure pour commander la fermeture d'un papillon des gaz (10) monté en amont du collecteur d'admission du dits moteur (1).
